Europäisches Patentamt

European Patent Office

Office européen des brevets

(11) Publication number: **0 232 783 B1**

# EUROPEAN PATENT SPECIFICATION

(45) Date of publication of patent specification: **06.05.92**    (51) Int. Cl.⁵: **F16K 31/06**

(21) Application number: **87101025.2**

(22) Date of filing: **26.01.87**

(54) An electromagnetically controlled three way valve for a hydraulic circuit.

(30) Priority: **11.02.86 IT 6710186**

(43) Date of publication of application:
**19.08.87 Bulletin 87/34**

(45) Publication of the grant of the patent:
**06.05.92 Bulletin 92/19**

(84) Designated Contracting States:
**DE ES FR GB**

(56) References cited:
| | |
|---|---|
| EP-A- 0 094 610 | DE-A- 1 934 212 |
| DE-A- 2 649 469 | DE-A- 3 340 753 |
| DE-U- 7 108 308 | US-A- 2 562 392 |
| US-A- 3 451 429 | US-A- 3 521 672 |
| US-A- 3 874 406 | |

(73) Proprietor: **BENDIX ALTECNA S.p.A.**
**Zona Industriale Casella Postale 27**
**I-70026 Modugno (Bari)(IT)**

(72) Inventor: **De Matthaeis, Sisto**
**Via Siracusa, 4**
**I-70026 Modugno(IT)**
Inventor: **Errico, Angelantonio**
**Via Molfetta No. 1 traversa 12/D**
**I-70054 Giovinazzo(IT)**
Inventor: **Ricco, Mario**
**Via Ferrannini, 10**
**I-70100 Bari(IT)**

(74) Representative: **Lejet, Christian**
**BENDIX FRANCE Division Technique Service**
**Brevets Bendix Europe 126 rue de Stalingrad**
**F-93700 Drancy(FR)**

## Description

The present invention relates to an electromagnetically controlled valve particularly adapted to be used in a braking circuit of a motor vehicle and comprising an inlet able to receive hydraulic fluid under pressure from the pump of the circuit, a first outlet able to supply the fluid to the hydraulic actuators of this circuit and a second outlet able to discharge the fluid to the reservoir of the circuit and the flow through which is controlled by a first valve member provided to open the port through this only when the fluid pressure is greater than a predetermined value.

In valves of this type the said inlet is in hydraulic communication with the first outlet, whilst this latter is in hydraulic communication with the second outlet and there is arranged at least one second, electromagnetically actuated valve member which is able to assume a first position in which the said inlet is put into hydraulic communication with the first outlet and the port between this and the second outlet is closed, and a second position in which, on the other hand, the port between the inlet and the first outlet is closed and this latter is in hydraulic communication with the second outlet. When the said second valve member is located in the first position previously defined fluid under pressure can be supplied to the actuators of the vehicle braking circuit to control actuation of these; on the other hand, when this member is brought into the second position the fluid supply inlet is closed and fluid can be discharged through the second outlet, overcoming the resistance, which is generated by the first valve member, which opposes the passage of the fluid through the outlet itself. The second valve member is brought from the first to the second position by the action of an electromagnetic force generated by an electromagnet under the action of an activation signal which is provided by an appropriate detector operable to detect, for example, the locking of the vehicle wheels. In this way, as is known, locking of the front wheels of the vehicle can be prevented on ground having very low adhesion, in such a way as to allow the maintenance of the manoeuvrability and directional stability of the vehicle itself, or locking of the rear wheels can be prevented thereby avoiding the phenomenon of spinning.

Known valves of the type described have several disadvantages.

First of all, they are very structurally complex because of the large number of parts which they are made of and because of the form of these; consequently they are of high cost because of the mechanical working operations which are required to obtain these parts and the assembly operations necessary correctly to mount the parts themselves.

Moreover, the operation of such valves is not entirely correct because of the time which is required to carry the valve members of the valve from the first to the second of the above defined positions: this disadvantage is consequent on the form and arrangement of the ducts which put the inlet into communication with the two outlets of the valve, and of the rather high inertia of the movable parts thereof. Further, the seal between the valve members and the associated seats is not entirely satisfactory because of working and assembly errors which originate from the complexity of the structure of such valves. Finally, in use, considerable wear of various movable parts of the valve can occur, which gives rise to hydraulic losses and sticking or irregular movement of the parts themselves. Such abnormal wear is normally produced by the action of the electromagnetic forces which are transmitted to the said movable parts and which generate high pressures between the surfaces of the parts themselves and the corresponding surfaces of the valve body against which they slide.

The object of the present invention is that of providing an electromagnetically controlled three-way valve of the type first mentioned, which will be free from the disadvantages which have been described above and which, therefore, will be structurally very simple, which can be commuted from a first to a second operating configuration in a very short time, which allows a perfect seal between the valve members and the associated seats to be obtained and which does not give rise, in use, to wear which would alter the initial operating conditions.

DE-A-3 340 753 discloses a valve of double valve seat type, according to the preamble of Claim 1, to be used in an internal combustion engine. The design of this valve does not decrease enough the inertia of the movable parts and does not allow very small ports.

US-A-3 874 406 discloses an anti-skid valve to be used in a brake system, having a ball carried by a disc as a valve member.

The object of the present invention is also to provide an electromagnetically controlled three-way valve in which the inertia of movable parts is as low as possible and the movement of same as small as possible in order to achieve very short times of operation with the corresponding reliability.

The valve of this invention is designed according to the features described in the preamble of Claim 1. Moreover, according to the invention, the first valve member includes a seating formed around the passage in the body and a ball biassed by a spring and pressed into contact with the seat, the spring being interposed between the ball and a threaded sleeve screwed into a bore in the body, and the first valve member comprises a movable core interposed between the spring and the ball on which the electromagnetic force of a second electromagnet acts to generate on the core a predetermined force to thrust the ball against the associated seat.

For a better understanding of the present invention a more detailed description of it is now given, by way of example, which reference to the attached drawings, in which:

Figure 1 is an axial section of a valve corresponding to an electromagnetically controlled three-way valve given as an example;

Figure 2 is an axial section of a valve corresponding to a second embodiment of the invention; and

Figure 3 is an axial section of a valve corresponding to a third embodiment of the invention.

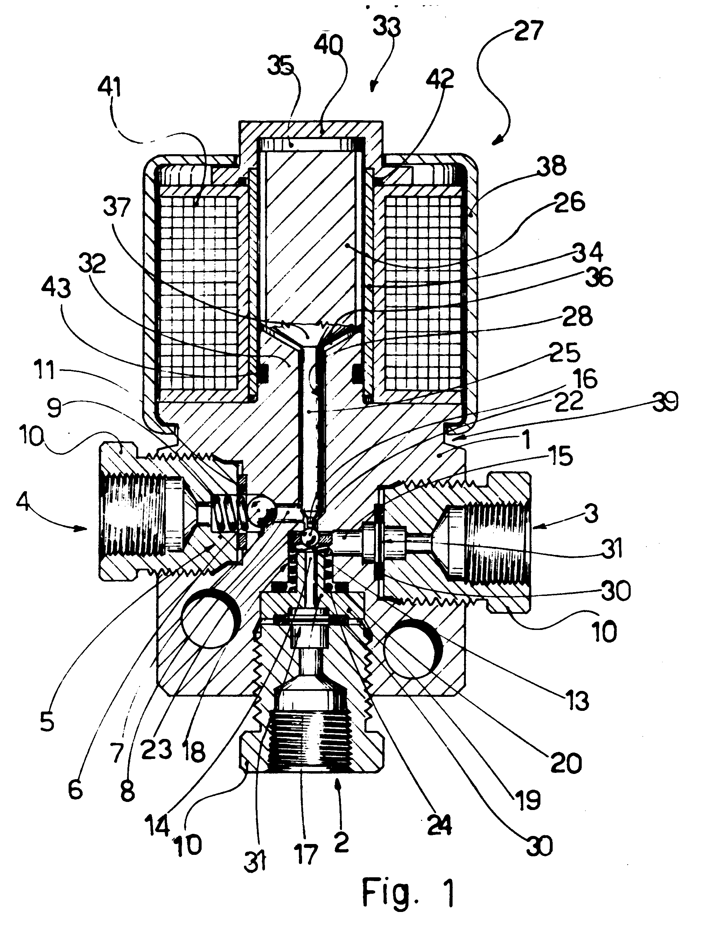

First, with reference to Figure 1, the valve of the example substantially comprises a body 1 in which is formed an inlet 2 able to receive hydraulic fluid under pressure from the pump (not shown) of a motor vehicle braking circuit, a first outlet 3 able to supply the fluid to the hydraulic actuators of this circuit, and a second outlet 4 able to discharge fluid to the reservoir of the circuit itself. Fluid flow through the second outlet 4 is controlled by a first valve member 5 prearranged to open the port itself only when the fluid pressure exceeds a predetermined value: conveniently this first valve member is constituted by a ball 6 operable to cooperate with a corresponding seat 7 formed on the end of a hole 8; the ball 6 is held against the associated seat 7 with a predetermined force by the action of a coil spring 9 interposed between the ball itself and a threaded connector 10 which is screwed into a corresponding threaded hole of the body 1; between the connector and the body is interposed a sealing washer 11 of deformable material, for example of copper.

In the body 1 is formed a chamber 13 of substantially cylindrical form into which opens an inlet port 14 which is in communication with the inlet 2 and which opens onto a flat surface of the chamber, a first outlet port 15 which is in communication with the corresponding outlet 3 and which opens into the cylindrical surface of the chamber itself, and a second outlet port 16 which is in communication with the corresponding outlet 4 and which opens onto the other flat surface of the chamber 13 opposite the former. As is clearly seen from Figure 1, the ports 14 and 16 are coaxial and the first opens onto the end surface of a bush 17 inserted into a bore 18 of the body 1 which defines, with the bush itself, the chamber 13; this bush has a flange 19 provided for cooperating with a seal 20 inserted between this and the body 1.

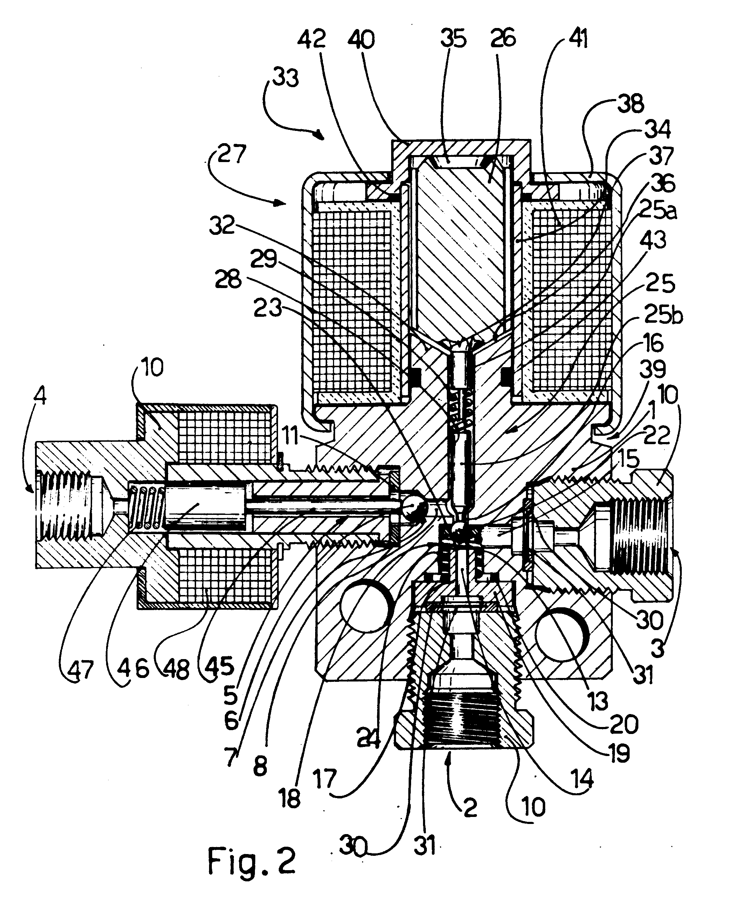

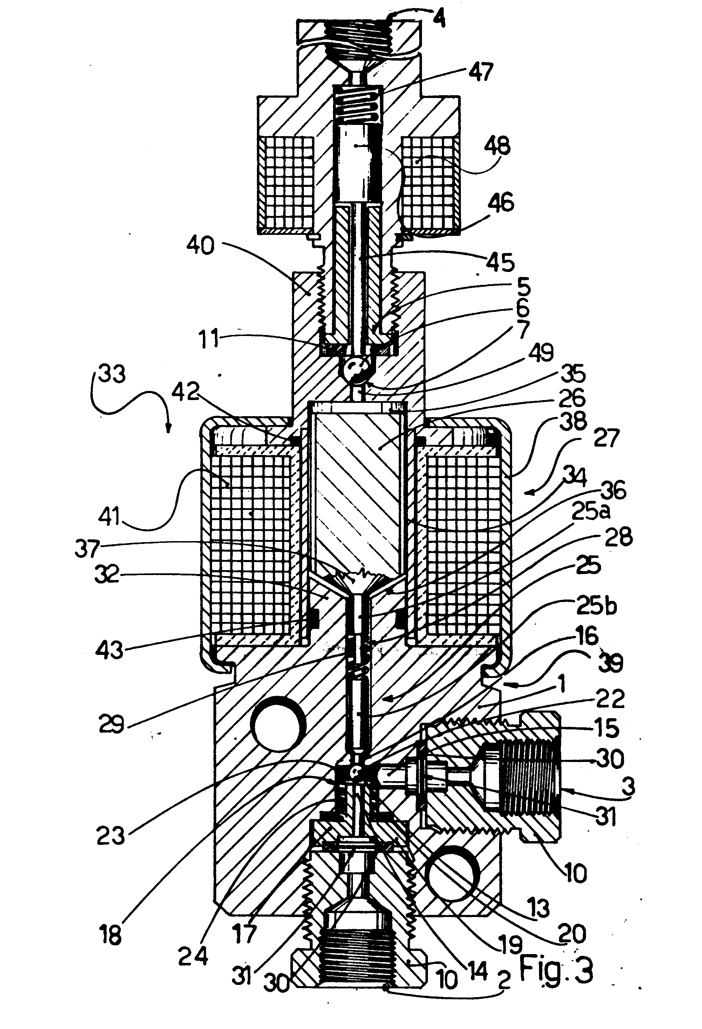

The valve further includes a second valve member constituted by a ball 22 operable to close the inlet port 14 or the second outlet port 16, which is carried by a disc 23 axially movable in the chamber 13 under the action of a coil spring 24 which acts on the disc itself, and an actuating push rod 25 which acts on the ball itself through the second port 16; the lower end of the push rod itself, which conveniently has a diameter less than that of the remaining part, contacts the ball, whilst the opposite end contacts a movable core 26 actuated by an electromagnet 27. The push rod 25 is axially movable within a bore 28 which axially traverses the body 1 and, conveniently, this push rod can be made, as is shown in the embodiment of Figure 2 and 3, in two sections 25a and 25b between which a coil spring 29 is disposed. The body 1 has a projecting part 32 of substantially cylindrical form coaxial with the bores 18 and 28, and the electromagnet 27, which is of substantially annular form, has a casing 33 also of annular form, the inner wall 34 of which is coupled to the said projecting part; as is clearly seen from Figure 1 the axial length of this latter is less than that of the casing 33 in such a way as to define, within the wall 34, a space 35 in which the core 26 is axially movable. The inlet 2 and the outlet 3, like the outlet 4, comprise threaded connectors 10 screwed onto the body 1; between each of these and the body is disposed a filter 30 supported by a ring 31.

Conveniently, the surface 36 of the projecting part 32 which faces towards the core 26 and the corresponding surface 37 of the core itself are substantially conical and at least one of these two surfaces is covered with a layer of non-magnetic material; alternatively, rather than providing such a layer of material, at least one of the two surfaces is provided with small projections obtained by plastic deformation of the material of the body or the core.

The casing 33 has an outer wall 38 of annular form, fixed to the body 1, for example by bending the lower edge thereof, by means of a plastic deformation operation, into the interior of an annular groove 39 of the body itself, and an end cover 40, connected to the wall 38 in any convenient manner; this wall and end cover are made of a ferromagnetic material, whilst the inner wall 34 is made of a non-magnetic material. In this way the magnetic circuit for the magnetic flux generated by the winding 41 of the electromagnet 27 is constituted by the body 1, the side wall 38, the end cover 40, the core 26 and the projecting part 32 of the body itself.

The inner wall 34 of the casing 27 is sealingly connected to the end cover 40, for example by means of a brazing strip 42, and between this and the projecting part 32 of the body itself there is interposed a seal 43 in such a way as to provide hydraulic sealing for the space 35.

According to the invention, the embodiment of the valve shown in Figure 2 differs from that of the preceding Figure in that the exception of the first valve member 5 the ball 6 of which is thrust against the corresponding seat 7 by a push rod 45 connected to a movable core 46 on which acts the force exerted by a coil spring 47 interposed between the core itself and a suitable shoulder of the connector 10; the electromagnetic force of a second electromagnet 48 can be made to act on this core so as to generate on the core itself a predetermined force for thrusting the ball 6 against the associated seat 7.

The embodiment of Figure 3 differs from those of the preceding Figures by the fact that the Second outlet 4, the port of which is controlled by the first valve member 5, includes a passage 49 formed in the end cover 40 of the casing 33 of the electromagnet 27. In this further embodiment the movement of the ball 6 is controlled by the same members which have been provided for the control of the ball 6 of the valve of the embodiment of Figure 2, which members have been indicated with the same reference numerals.

The operation of the valve of the invention is as follows.

In normal operating conditions of the braking system, during actuation of the brakes when the limit of adhesion of the wheels on the ground has not been reached, the movable parts of the valve are located in the configuration represented in the drawing, that is to say in which the ball 22 closes the second outlet port 16 and the inlet port 14 is on the other hand open and is in communication with the first outlet port 15: in this way the pump of the braking system is put into communication with the actuators of the circuit itself and discharge of the fluid towards the reservoir of the circuit is prevented. When, on the other hand, following an appropriate signal indicating that the limit of adhesion of one or more of the vehicle wheels has been reached, the electromagnet 27 is activated, the core 26 is attracted by the projecting part 32 of the body: in fact, following this activation an electromagnetic flux is generated through the magnetic circuit constituted by the projecting part 32, the body 1, the side wall 38, the end cover 40 and the core 26. The electromagnetic force acting on this latter causes displacement of the push rod 25 downwards and therefore the ball 22 and associated disc 23 are also pressed downwards overcoming the resilient reaction of the spring 24. In this way the ball 22 is carried into its second operating position in which it closes the inlet port 14 and opens the second outlet port 16, therefore allowing the fluid to pass from the first outlet port 15 to the second outlet port 16 towards the passage 8: since the fluid pressure which reaches the passage 8 is rather high this is able to cause displacement of the ball 6 overcoming the resilient reaction of the coil spring 9 to discharge the fluid itself through the second outlet 4 towards the interior of the braking circuit reservoir. In this way the fluid pressure in the conduits which put the actuators into communication with the discharge is significantly reduced, causing immediate unlocking of the wheels of the vehicle. When the normal rolling conditions of the wheels themselves have been restored the electromagnet 27 is de-energised and the initial operating conditions of the valve are restored.

Whenever the electromagnet 48 is activated (embodiments of Figures 2 and 3) the closure force of the ball 6 can be further increased by a predetermined amount for the purpose of maintaining a desired pressure within the braking circuit sufficient to cause braking of the motor vehicle but very much reduced to allow the rotation of the wheels of the motor vehicle itself.

The stroke of the core 26 necessary to carry the ball 22 to close the inlet port 14 is smaller than the distance between the surfaces 36 and 37, in such a way as to have a residual interspace between these surfaces at the end of the stroke itself; because of the presence of the layer of non-magnetic material mentioned above (or the projecting parts) the core 26 can easily be brought into its initial position by the action of the spring 24 as soon as the electromagnet 27 is de-energised.

It is therefore evident that the valve described is structurally very simple and functionally secure. In fact, it comprises few movable parts, of simple form, and has a very compact structure. The time required to commute the valve from the first to the second operative position is extremely small because of the small inertia of the movable parts and, above all, because of the form and arrangement of the ducts which put the second outlet port 3 into communication with the first outlet port 4 during the phase of discharge of the fluid towards the reservoir.

Moreover, the seal formed by the ball 22, both on the inlet port 14 and on the outlet port 16 is entirely satisfactory in all operating conditions; this results from the perfect coaxiality of the said ports, which is obtained by the fact that the port is located on the body 1 on which the bore 18 is also formed, which as well as forming the chamber 13 also constitutes centering for the flange 19 of the bush 17: consequently, in these conditions, the inlet port 14 which is formed on this bush is also perfectly coaxial with the port 16. The perfect seal formed by the ball 22 is also consequent on the manner with which this ball is controlled through the push rod 25: this only contacts against the ball and therefore does not transmit to it any tranverse forces which would tend to displace it from the correct contact position on the associated seats of the ports 14 and 16.

No significant wear in the various movable parts of the valve is produced and, in particular, on the push rod 25; in fact, since this only contacts against the core 26, this latter transmits to the push rod only a perfectly axial force, whilst possible transverse components of the exciting electromagnetic force which acts on the core 26 are not transferred to the push rod because of the simple form of the contact which is provided between the first and the second.

Finally, because of the magnetic circuit formed with the various parts of the body of the valve and the casing 33 of the electromagnet 27 a high ratio between the actuating force on the movable core 26 and the electrical power consumed is obtained: in fact, this circuit allows a very regular magnetic flux to form and the core 26 is disposed completely within this flux and in the immediate vicinity of the winding 41 which generates the flux itself.

There is also obtained a perfect seal against the external environment because of the presence of the rings 31 of the filters 30 interposed between each connector 10 and the corresponding shoulder formed on the body 1.

**Claims**

1.  An electromagnetically controlled three-way valve which can be inserted in a hydraulic circuit, comprising an inlet (2) to receive hydraulic fluid under pressure from the pump of the circuit, a first outlet (3) to supply the said fluid under pressure to the hydraulic actuators of the circuit, a second outlet (4) to discharge the fluid to the reservoir of the said circuit, the said inlet (2) being in hydraulic communication with the said first outlet (3) and the said first outlet being in hydraulic communication with the said second outlet (4), there being arranged at least one electromagnetically actuated valve member (22) which can assume a first position in which the said inlet (2) is put into hydraulic communication with the said first outlet (3) and the passage between the said first outlet (3) and the second outlet (4) is closed, and a second position in which on the other hand the passage between the said inlet (2) and the said first outlet (3) is closed whilst this latter is in communication with the said second outlet (4), said valve further comprising a body (1) in which is formed a chamber (13) of substantially cylindrical form into which opens an inlet port (14) which is in communication with the said inlet (2), a first outlet port (15) which is in communication with the said first outlet (3), and a second outlet port (16) which is in communication with the said second outlet (4), the said inlet port (14) and the second outlet port (16) being coaxial and the said electromagnetically actuated valve member being constituted by a ball (22) operable to close the said inlet port (14) or the said second outlet port (16) and an actuating push rod (25) which acts on the said ball through the said second outlet port (16) and is actuated by a movable core (26) of an electromagnet (27), the port of the said second outlet (4) being controlled by a further valve member (5) arranged to open the said port only when the fluid pressure is greater than a predetermined value, said inlet port (2) opening into a flat surface of the said chamber (13) while the said first outlet port (15) opens into a cylindrical surface of the said chamber (13) and the said second outlet port (16) opens into another flat surface of the said chamber (13) opposite the former one, said ball (22) being carried by a disc (23) axially movable in the said chamber (13) under the action of a spring (24) which acts on the disc (23) itself, the said push rod being axially movable in a first axial bore (28) formed in the body of the valve and coaxial with the said chamber, the said second outlet port (16) which is controlled by the said further valve member (5) being formed by means of a passage (49) formed in the said body, which opens into the said first bore (28) of the said body, said valve being characterised by the fact that the said further valve member (5) includes a seating (7) formed around the passage (49) in the said body and a ball (6) biassed by a spring (47) and pressed into contact with the said seat, the said spring being interposed between the said ball and a threaded sleeve (10) screwed into a bore in the said body, and that the said further valve member (5) comprises, a movable core (46) interposed between the said spring (47) and the said ball on which the electromagnetic force of a second electromagnet (48) acts to generate on the said core a predetermined force to thrust the said ball (6) against the associated seat (7).

2.  A valve according to Claim 1, characterised by the fact that the said push rod includes two sections (25a) and (25b) between which is disposed a coil spring (29).

3. A valve according to any of the preceding Claims, characterised by the fact that the said flat surface of the said chamber into which the said inlet port opens is constituted by the end surface of a bush (17) inserted into a second bore (18) of the said body which is coaxial with the said first bore, the said bush having a flange (19) arranged to cooperate with a seal (20) inserted between this and the said body.

4. A valve according to any preceding Claim, characterised by the fact that the said valve body has a projecting part (32) coaxial with the said first and second bores, the said electromagnet being of annular form and having a casing (33) of annular form the inner wall (34) of which is coupled with the said projecting part, the axial length of the said projecting part being less than the axial length of the said casing and the said core being axially movable within the space (35) defined by the said internal wall of the casing, the said core having a form substantially the same as that of the said space.

5. A valve according to Claim 4, characterised by the fact that the said casing has an outer wall (38) of annular form fixed to the said body, an end cover (40) connected to the said outer wall and to the said inner wall, the said outer wall and the said end cover being made of a ferromagnetic material and the said inner wall being made of a non-magnetic material in such a way as to constitute a magnetic circuit for the said electromagnet which includes the said body, the said outer wall, the said end cover and the said core.

6. A valve according to Claim 4 or claim 5, characterised by the fact that the said inner wall is sealingly connected to the said end cover and between it and the said projecting part of the body there is provided a seal (43) in such a way as to form a hydraulic seal for the said space.

7. A valve according to any preceding Claim, characterised by the fact that the said surface (36) of the said projecting part of the said body which faces towards the said core and the corresponding surface (37) of the core itself are substantially conical and at least one of the said surfaces is covered with a layer of non-magnetic material.

8. A valve according to Claim 6, characterised by the fact that there are formed small projections on at least one of the said two surfaces.

9. A valve according to any of Claims 1 to 7, characterised by the fact that the said second outlet port (16) which is controlled by the said further valve member (5) is formed by means of a passage (49) passing through the said end cover (40) of the said casing.

10. A valve according to any preceding Claim, characterised by the fact that the said inlet and the said first and second outlets include threaded connectors (10) screwed in corresponding threaded bores of the said body, there being interposed a filter (30) between each of the said connectors and the said body, each filter (30) being provided with a support frame (31) made of a deformable material able to form an hydraulic seal when the respective connector is screwed into the respective threaded bore.

**Revendications**

1. Soupape à trois voies commandée par électro-aimant pouvant être insérée dans un circuit hydraulique, comprenant une entrée (2) destinée à recevoir le fluide hydraulique sous pression en provenance de la pompe du circuit,une première sortie (3) destinée à fournir le fluide sous pression aux moyens de commande hydraulique du circuit,une seconde sortie (4) pour décharger le fluide au réservoir du dit circuit, l'entrée (2) étant en communication avec la première sortie (3) et la première sortie étant en communication hydraulique avec la seconde sortie (4) , au moins un élément de soupape (22) actionné par électro-aimant étant disposé là pour prendre une première position dans laquelle l'entrée (2) est mise en communication hydraulique avec la première sortie (3) et le passage entre la première sortie (3) et la seconde sortie (4) est fermé, et une seconde position dans laquelle d'autre part le passage entre l'entrée (2) et la première sortie (3) est fermé tandis que cette dernière est en communication avec la seconde sortie (4),la dite soupape comprenant un corps (1) dans lequel est pratiquée une chambre (13) de forme pratiquement cylindrique dans laquelle débouche un conduit d'entrée (14)qui est en communication avec l'entrée (2),un premier conduit de sortie (15) qui est en communication avec la première sortie (3),et un second conduit (16) qui est en communication avec la seconde sortie (4) ,le conduit d'entrée (14) et le second conduit de sortie (16) étant coaxiaux et l'élément de soupape actionné électromagnétiquement étant constitué par une bille (22) fonctionnant pour fermet le conduit d'entrée (14) ou le second conduit de sortie (16) et une tige de poussée de commande (25) qui agit sur la dite bille au moyen du second conduit de sortie (16) et est actionnée par le noyau mobile (26) d'un électro-aimant (27), le conduit de la seconde sortie (4) étant commandé par un autre élément de soupape (5) prévu pour ouvrir le dit conduit seulement lorsque la pression du fluide dépasse une valeur prédéterminée, le conduit d'entrée (2)s'ouvrant sur une surface plate de la chambre (13) tandis que le premier conduit de sortie (15) débouche sur une surface cylindrique de cette chambre (13) et que le second conduit de sortie (16) débouche sur une autre surface plate dè la chambre (13) face à la première,la dite bille (22) étant portée par un disque (23) mobile axialement dans la chambre (13) sous l'action d'un ressort (24) qui agit sur le disque (23) lui même, la dite tige de poussée étant mobile dans un premier alésage (28) formé dans le corps de la soupape et coxial à la chambre ,le second conduit de sortie (16) qui est commandé par l'élément de soupape (5) étant formé par un passage (49) formé dans le dit corps, qui débouche dans le premier alésage (28) du dit corps,la dite soupape étant caractérisée par le fait que l'élément de soupape supplémentaire (5) inclut un siège (7) formé autour du passage (49) dans le dit corps et une bille (6) déplacée par un ressort (47) et pressée au contact du dit siège,le dit ressort étant interposé entre la dite bille et un manchon fileté (10) vissé dans un alésage pratiqué dans le corps (1) , et par le fait que l'élément de soupape supplémentaire (5) comprend un noyau mobile (46) interposé entre le ressort (47) et la bille (6) sur laquelle la foree électromagnétique d'un second électro-aimant (48) agit pour engendrer sur le dit noyau une force prédéterminée poussant la bille (6) contre le siège associé (7).

2. Soupape selon la revendication 1, caractérisée par le fait que la tige de poussée (25) comprend deux parties (25a) et (25b) entre lesquelles est interposé un ressort hélicoïdal (29).

3. Soupape selon une qualconque des révéndications précédentes,caractérisée par le fait que que la surface plate de la chambre (13)dans laquelle débouche le conduit d'entrée (14) est constituée par la surface terminale d'un palier (17) inséré dans un second alésage (18) du corps (1) qui est coaxial au premier alésage (28) ,le dit palier étant pourvu d'un flasque (19) disposé pour agir conjointement avec un joint (20) inséré entre celui-ci et le corps (1).

4. Soupape selon une quelconque des revendications précédentes, caractérisée par le fait que le corps (1) comprend une partie en saillie (32) coaxiale aux premier et second alésages (26,16), le dit électro-aimant étant de forme annulaire et ayant un boîtier (33) de forme annulaire dont la paroi intérieure (34) est accouplée à la partie en saillie, la longueur axiale de la dite partie en saillie étant inférieure à la longueur axiale du dit boîtier et le dit noyau pouvant se déplacer axialement dans l'espace (35) défini par la paroi interne du boîtier, le dit noyau ayant une forme pratiquement identique à celle du dit espace.

5. Soupape selon la revendication 4, caractérisée par le fait que le boîtier (33) comprend une paroi extérieure (38) de forme annulaire fixée au corps (1) ,un capot d'extrémité relié à la paroi extérieure (38) et à la paroi intérieure (34),la dite paroi extérieure et le dit capot d'extrémité étant constitués d'un matériau ferromagnétique,et la paroi intérieure étant constituée d'un matériau non magnétique de manière à constituer un circuit magnétique pour l'électro-aimant qui inclut le dit corps, la dite paroi extérieure, le dit capot d'extrémité et le dit noyau.

6. Soupape selon les revendications 4 ou 5 , caractérisée par le fait que la paroi intérieure (34) est reliée par joint au capot d'extrémité (40) et qu'entre cette paroi (34) et la partie en saillie (32) du corps (1) est prévu un joint (43) de manière à constituer joint hydraulique pour l'espace (35).

7. Soupape selon une quelconque des revendications précédentes, caractérisée par le fait que la surface (36) de la partie en saillie du corps (1) qui fait face au dit noyau et la surface correspondante 37 du noyau lui-même sont pratiquement coniques et qu'au moins une de ces surfaces est recouverte par une couche de matérieu non magnétique.

8. Soupape selon la revendication 6, caractérisée par le fait que des petites saillies sont formées sur au moins une des deux dites surfaces.

9. Soupape selon une quelconque des revendications 1 à 7, caractérisée par le fait que le second conduit de sortie (16) qui est commandé par l'élément de soupape supplémentaire (5) est formé par un passage (49) traversant le capot d'extrémité (40) du boîtier (33).

10. Soupape selon une quelconque des revendications précédentes,caractérisée par le fait que la dite entrée et les dites première et seconde sorties comportent des embouts filetés (10) vissés dans les alésages filetés correspondants du corps (1) , un filtre (30) étant interposé entre chacun des dits embouts et le dit corps (1) ,et chaque filtre (30) étant pourvu d'un cadre support (31) composé d'un matériau déformable constituant joint hydraulique lorsque l'embout respectif est vissé dans son alésage fileté correspondant.

**Patentansprüche**

1. Elektromagnetisch gesteuertes Dreiwegeventil, das in einen Hydraulikkreis einsetzbar ist, mit einem Einlaß (2) zur Aufnahme von unter Druck stehender Hydraulikflüssigkeit aus der Pumpe des Kreises, einem ersten Auslaß (3) wird zur Abgabe der unter Druck stehenden Flüssigkeit an die hydraulischen Betätiger des Kreises, einem zweiten Auslaß (4) zur Abgabe der Flüssigkeit an das Reservoir des Kreises, wobei der Einlaß (2) mit dem ersten Auslaß (3) und der erste Auslaß mit dem zweiten Auslaß (4) in Strömungsverbindung steht, mindestens ein elektromagnetisch betätigtes Ventilglied (22) vorgesehen ist, das eine erste Stellung und eine Zweite Stellung einnehmen kann, wobei in der ersten Stellung der Einlaß (2) mit dem ersten Auslaß (3) in Strömungsverbindung steht und der Kanal zwischen dem ersten Auslaß (3) und dem zweiten Auslaß (4) geschlossen ist und in der zweiten Stellung der Kanal zwischen dem Einlaß (2) und dem ersten Auslaß (3) geschlossen ist, während der letztere mit dem zweiten Auslaß (4) in Strömungsverbindung steht, wobei das Ventil ferner einen Körper (1) aufweist, in dem eine Kammer (13) von im wesentlichen zylindrischer Form gebildet ist, in die eine mit dem Einlaß (2) verbundene Einlaßöffnung (14), eine mit dem ersten Auslaß (3) verbundene erste Auslaßöffnung (15) und eine mit dem zweiten Auslaß (4) verbundene Auslaßöffnung (16) münden, wobei die Einlaßöffnung (14) und die zweite Auslaßöffnung (16) koaxial angeordnet sind und das elektromagnetisch betätigte Ventilglied von einer Kugel (22) und einer Betätigungsstange (25) gebildet wird, von denen die Kugel so betätigbar ist, daß sie die Einlaßöffnung (14) oder die zweite Auslaßöffnung (16) verschließt, und die Betätigungsstange (25) durch die zweite Auslaßöffnung (16) hindurch auf die Kugel einwirkt und von einem beweglichen Kern (26) eines Elektromagneten (27) betätigt wird, wobei die Öffnung des zweiten Auslasses (4) von einem weiteren Ventilglied (5) gesteuert wird, das diese Öffnung nur dann öffnet, wenn der Strömungsmitteldruck größer als ein vorgegebener Wert ist, die Einlaßöffnung (2) in eine ebene Fläche der Kammer (13) mündet, während die erste Auslaßöffnung (15) in eine zylindrische Fläche der Kammer (13) und die zweitauslaßöffnung (16) in eine weitere ebene Fläche der Kammer (13) gegenüber der erstgenannten mündet, wobei die Kugel (22) von einer Scheibe (23) getragen wird, die in der Kammer (13) unter der Wirkung (24) axial beweglich ist, welche auf die Scheibe (23) selbst einwirkt, wobei die Betätigungsstange in einer ersten axialen Bohrung (28) axial beweglich ist, die in dem Körper des Ventils gebildet ist und koaxial zu der Kammer verläuft, wobei die zweite Auslaßöffnung (16), die von dem weiten Ventilglied (5) gesteuert wird, von einem in dem Köper gebildeten Kanal (49) gebildet wird, der in die erste Bohrung (28) des Körpers bildet,
dadurch gekennzeichnet,
daß das weitere Ventilglied (5) einen den Kanal (49) im Körper umgebenden Sitz (7) und eine Kugel (6) aufweist, die von einer Feder (47) vorgespannt und in Anlage mit dem Sitz gedrückt wird, wobei die Feder zwischen der Kugel und einer Gewindehülse (10) angeordnet ist, die in eine Bohrung im Körper eingeschraubt ist, und daß das weitere Ventilglied (5) einen beweglichen Kern (46) aufweist, der zwischen der Feder (47) und der Kugel angeordnet ist, auf die die elektromagnetische Kraft eines zweiten Elektromagneten (48) einwirkt, um auf den Kern einer vorgegebenen Kraft auszuüben, die die Kugel gegen den zugehörigen Sitz (7) andrückt.

2. Ventil nach Anspruch 1, dadurch gekennzeichnet, daß die Betätigungsstange zwei Abschnitte (25a und 25b) aufweist, zwischen denen eine Schraubenfeder (29) angeordnet ist.

3. Ventil nach einem der vorhergehenden Ansprüche, dadurch gekennzeichnet, daß die ebene Fläche der Kammer, in die die Einlaßöffnung mündet, von der Stirnfläche einer Hülse (17) gebildet wird, die in eine zweite Bohrung (18) des Körpers eingesetzt ist, welche koaxial zu der ersten Bohrung verläuft, wobei die Hülse einen Flansch (19) aufweist, der mit einer zwischen diesem und dem Körper eingesetzten Dichtung (20) zusammenwirkt.

4. Ventil nach einem der vorhergehenden Ansprüche, dadurch gekennzeichnet, daß der Ventilkörper ein vorstehendes Teil (32) aufweist, das koaxial zu der ersten und zweiten Bohrung verläuft, wobei der Elektromagnet ringförmig ausgebildet ist und ein ringförmiges Gehäuse (33) besitzt, dessen Innenwand (34) mit dem vorstehenden Teil gekoppelt ist, wobei die axiale Länge des vorstehenden Teils kleiner als die axiale Länge des Gehäuses ist und der Kern innerhalb des von der Innenwand des Gehäuses gebildeten Raumes (35) axial beweglich ist, wobei der Kern im wesentlichen die gleiche Form wie dieser Raum hat.

5. Ventil nach Anspruch 4, dadurch gekennzeichnet, daß das Gehäuse eine am Körper befestigte ringförmige Außenwand (38) und einen endseitigen Deckel (40) aufweist, der mit der Außenwand und der Innenwand verbunden ist, wobei die Außenwand und der Deckel aus einem ferromagnetischen Material und die Innenwand aus einem unmagnetischen Material bestehen, so daß sie einen Magnetkreis für den Elektromagneten bilden, der den Körper, die Außenwand, den Deckel und den Kern umfaßt.

6. Ventil nach Anspruch 4 oder 5, dadurch gekennzeichnet, daß die Innenwand mit dem Deckel abgedichtet verbunden ist und daß zwischen ihr und dem vorstehenden Teil des Körpers eine Dichtung (43) vorgesehen ist, um eine hydraulische Abdichtung für den besagten Raum zu bilden.

7. Ventil nach einem der vorhergehenden Ansprüche, dadurch gekennzeichnet, daß die Fläche 36 des vorstehenden Teils des Körpers, der dem Kern und der entsprechenden Fläche (37) des Kerns zugewandt ist, im wesentlichen konisch ausgebildet ist und mindestens eine der Flächen von einer Schicht aus unmagnetischem Material bedeckt wird.

8. Ventil nach Anspruch 6, dadurch gekennzeichnet, daß an mindestens einer der beiden Flächen kleine Vorsprünge gebildet sind.

9. Ventil nach einem der Ansprüche 1 bis 7, dadurch gekennzeichnet, daß die zweite Auslaßöffnung (16), die von dem weiteren Ventilglied (5) gesteuert wird, von einem Kanal (49) gebildet wird, der durch den Deckel (40) des Gehäuses verläuft.

10. Ventil nach einem der vorhergehenden Ansprüche, dadurch gekennzeichnet, daß der Einlaß und der erste und zweite Auslaß Gewindeanschlüsse (10) aufweisen, die in entsprechende Gewindebohrungen des Körpers eingeschraubt sind, wobei ein Filter (30) zwischen jeden Anschluß und den Körper eingesetzt ist und jeder Filter (30) mit einem Abstützrahmen (31) versehen ist, der aus einem verformbaren Material besteht, um eine hydraulische Abdichtung zu bilden, wenn der entsprechende Anschluß in die entsprechende Gewindebohrung eingeschraubt ist.

Fig. 1

Fig.2

Fig. 3